# EUROPEAN PATENT SPECIFICATION

(11) **EP 4 328 940 B1**
(45) Date of publication and mention of the grant of the patent: **16.04.2025**
(21) Application number: 23191604.0
(22) Date of filing: 16.08.2023
(51) Int. Cl.: H01F 3/10, H02M 1/12, H02M 1/44

(54) **INVERTER AND INTEGRATED INDUCTOR**
WECHSELRICHTER UND INTEGRIERTE INDUKTIVITÄT
ONDULEUR ET INDUCTEUR INTÉGRÉ

(30) Priority: 16.08.2022 CN 202210983021
(43) Date of publication of application: 28.02.2024
(73) Proprietor: Huawei Digital Power Technologies Co., Ltd., Shenzhen, 518043 (CN)
(72) Inventor: YANG, Gun, Shenzhen (CN); CHEN, Dehong, Shenzhen (CN); SONG, Zhengang, Shenzhen (CN); BI, Jianguo, Shenzhen (CN)
(74) Representative: Maiwald GmbH

(56) References cited:
- CN-A- 115 312 304
- CN-U- 217 544 322
- US-A1- 2016 329 705
- KURM SHASHANK ET AL: "Dual Active Bridge Based Reduced Stage Multiport DC/AC Converter for PV-Battery Systems", IEEE TRANSACTIONS ON INDUSTRY APPLICATIONS, IEEE SERVICE CENTER, PISCATAWAY, NJ, US, vol. 58, no. 2, 21 December 2021 (2021-12-21), pages 2341 - 2351, XP011902977, ISSN: 0093-9994, [retrieved on 20220312], DOI: 10.1109/TIA.2021.3137371
- BORSALANI JAVAD ET AL: "An Integrated EMI Choke With Improved DM Inductance", IEEE TRANSACTIONS ON POWER ELECTRONICS, INSTITUTE OF ELECTRICAL AND ELECTRONICS ENGINEERS, USA, vol. 36, no. 2, 17 July 2020 (2020-07-17), pages 1646 - 1658, XP011811979, ISSN: 0885-8993, [retrieved on 20200925], DOI: 10.1109/TPEL.2020.3010131

## Description

### TECHNICAL FIELD

This application relates to the photovoltaic field, and in particular, to an inverter and an integrated inductor.

### BACKGROUND

With development of modern industrial technologies, various nonlinear and time-varying power electronic apparatuses such as an inverter are widely used in a power system. However, there is negative effect while industrial production efficiency is improved. Due to an interference electromagnetic field in the inverter, a differential mode current is generated between conducting wires, or a common mode current is generated between a conducting wire and the ground. Both the differential mode current and the common mode current interfere with a load in the power system, and affect a normal operation of the load. Therefore, a filter inductor is usually disposed in the power system. The filter inductor includes a differential mode inductor and a common mode inductor. The differential mode inductor is used to suppress differential mode interference, and the common mode inductor is used to suppress common mode interference. However, as two independent components, the common mode inductor and the differential mode inductor are separately manufactured and independently mounted. Therefore, when the filter inductor is mounted on a circuit board, the filter inductor occupies a large board area, has low power density, and is costly to manufacture separately.

US 2016/0329705 A1 describes a modular and reconfigurable electrical power conversion device.

KURM SHASHANK ET AL: "Dual Active bridge Based Reduced Stage Multiport DC/AC Converter for PV-Battery Systems" describes a multiport converter for PC-battery systems powering standalone loads.

BORSALANI JAVAD ET AL: "An Integrated EMI Choke With Improved DM Inductance" describes an integrated choke with a certain winding structure, consisting of two cores a toroid and a solenoid.

### SUMMARY

This application provides an inverter and an integrated inductor, to reduce an occupied area of a filter inductor, improve power density, and reduce costs.

The present invention is defined by the subject-matter of the independent claim. Additional features of the invention are presented in the dependent claims.

According to an aspect, this application provides an inverter. The inverter includes a direct current-alternating current conversion circuit and a filter circuit, where the filter circuit is connected to an alternating current side of the direct current-alternating current conversion circuit. The filter circuit includes an integrated inductor. The integrated inductor includes a common mode magnetic core, a differential mode magnetic core, and at least two windings. The differential mode magnetic core includes a second magnetic core and a third magnetic core. The common mode magnetic core, the second magnetic core, and the third magnetic core are stacked in sequence. Each winding is located between the third magnetic core and the second magnetic core, and is wound on the common mode magnetic core and the second magnetic core. The at least two windings are spaced by the third magnetic core.

In this solution, the filter circuit is configured to perform filtering, suppress differential mode resonance, and suppress common mode interference. The integrated inductor is disposable on a circuit board, and the stacking may mean that the common mode magnetic core, the second magnetic core, and the third magnetic core are disposed in sequence in a direction vertical to the circuit board. There is a gap between the third magnetic core and the second magnetic core, and the winding is located in the gap. The third magnetic core may have a plurality of partition structures, and two adjacent windings are spaced by one partition structure. The winding and the common mode magnetic core form a common mode inductor. The winding, the second magnetic core, and the third magnetic core form a differential mode inductor.

In this solution, the common mode magnetic core and the differential mode magnetic core share the winding, to integrate the common mode inductor and the differential mode inductor into one component. This helps save space and reduce costs, and can further reduce a copper loss. Therefore, impact of the copper loss on efficiency of an inverter system is reduced, and efficiency of the integrated inductor is effectively improved. When the integrated inductor is assembled to a circuit board, because the common mode magnetic core and the differential mode magnetic core are stacked, an occupied area of the integrated inductor on the circuit board can be saved, and power density is improved.

In an implementation of this aspect, the third magnetic core and the second magnetic core enclose at least two mounting holes, and each winding correspondingly passes through one of the mounting holes. In this solution, the third magnetic core and the second magnetic core may enclose the at least two mounting holes, so that the differential mode magnetic core having such a structure is reliable and features good mass production. This helps stack the differential mode magnetic core and the common mode magnetic core.

In an implementation of the aspect, the third magnetic core includes at least two magnetic columns and an upper magnetic core. The at least two magnetic columns are located between the upper magnetic core and the second magnetic core. The upper magnetic core, the at least two magnetic columns, and the second magnetic core enclose at least two mounting holes. In this solution, the magnetic column may be directly connected to the upper magnetic core or an air gap is formed. Alternatively, the magnetic column is directly connected to the second magnetic core or an air gap is formed. The winding is located between the upper magnetic core and the second magnetic core, and adjacent windings are spaced by one magnetic column. In this solution, a part of the second magnetic core, any two adjacent magnetic columns, and a part of the upper magnetic core enclose one mounting hole, and form a differential mode magnetic circuit. The differential mode magnetic core having such a structure is simple and reliable, and features good mass production. This helps stack the differential mode magnetic core and the common mode magnetic core.

In an implementation of the aspect, the third magnetic core includes at least two magnetic columns. An end of each magnetic column is close to the second magnetic core, and ends, away from the second magnetic core, of the at least two magnetic columns are converged. The at least two magnetic columns and the second magnetic core enclose at least two mounting holes. In this solution, convergence may mean that ends, away from the second magnetic core, of the magnetic columns are connected to form the air gap, or may mean that the ends, away from the second magnetic core, of the magnetic columns are close to each other to form the air gap. In this solution, the part of the second magnetic core and the any two adjacent magnetic columns enclose one mounting hole, and form a differential mode magnetic circuit. The differential mode magnetic circuit provided in this solution has a simple structure, which helps miniaturize a size of the integrated inductor.

In an implementation of the aspect, the common mode magnetic core has a first through hole, and the second magnetic core is located on a side of the common mode magnetic core in an axial direction of the first through hole. The second magnetic core has a second through hole, and the second through hole is communicated with the first through hole. Each mounting hole is communicated with the second through hole. Each winding correspondingly passes through one of the mounting holes, the second through hole, and the first through hole. In this solution, the common mode magnetic core and the second magnetic core each may be in an annular shape. In this solution, a specific stacked structure of the common mode magnetic core and the differential mode magnetic core is limited. The stacked structure is simple and reliable, and features good mass production. This helps miniaturize the size of the integrated inductor.

In an implementation of the aspect, a projection of the second magnetic core in the axial direction falls within a range of the common mode magnetic core. In this solution, a projection of the second magnetic core in a stacking direction is located within a contour and a boundary of the common mode magnetic core. This saves a projection area of the integrated inductor in the stacking direction, and saves a board area.

In an implementation of the aspect, a projection of the third magnetic core in the axial direction falls within a circumcircle of projections of the at least two windings in the axial direction. In this solution, projections of all windings in the axial direction may be located in a same circle, and a projection of each winding in the axial direction is connected to the circle. The circle may be referred to as a circumcircle. In this solution, the circumcircle determines a maximum outline dimension of the integrated inductor, so that the projection of the third magnetic core in the axial direction does not exceed the circumcircle. This saves the projection area of the integrated inductor in the axial direction, and saves the board area.

In an implementation of the aspect, the integrated inductor includes a non-magnetic plate disposed between the common mode magnetic core and the second magnetic core, and the non-magnetic plate forms a first air gap. Alternatively, the integrated inductor includes a plurality of non-magnetic pillars disposed between the common mode magnetic core and the second magnetic core, and the plurality of non-magnetic pillars form a first air gap. Alternatively, an insulation layer is covered on a surface of the common mode magnetic core and/or a surface of the second magnetic core, and the insulation layer forms a first air gap. In this solution, magnetic circuits of the common mode magnetic core and the differential mode magnetic core are spaced by a first air gap between the common mode magnetic core and the differential mode magnetic core, so that the common mode magnetic circuit and the differential mode magnetic circuit are independent of each other and do not affect each other. This improves an overall anti-saturation capability of the integrated inductor.

In an implementation of the aspect, the first air gap is greater than or equal to 0.5 mm. When the first air gap is within the value range, a layout of the integrated inductor is compact, occupied mounting space is reduced, and the overall anti-saturation capability of the integrated inductor is optimized.

According to another aspect, this application provides an integrated inductor. The integrated inductor includes a common mode magnetic core, a differential mode magnetic core, and at least two windings. The differential mode magnetic core includes a second magnetic core and a third magnetic core. The common mode magnetic core, the second magnetic core, and the third magnetic core are stacked in sequence. Each winding is located between the third magnetic core and the second magnetic core, and is wound on the common mode magnetic core and the second magnetic core. The at least two windings are spaced by the third magnetic core.

In this solution, the integrated inductor is disposable a circuit board, and the stacking may mean that the common mode magnetic core, the second magnetic core, and the third magnetic core are disposed in sequence in a direction vertical to the circuit board. There is a gap between the third magnetic core and the second magnetic core, and the winding is located in the gap. The third magnetic core may have a plurality of partition structures, and two adjacent windings are spaced by one partition structure. The winding and the common mode magnetic core form a common mode inductor. The winding, the second magnetic core, and the third magnetic core form a differential mode inductor.

In this solution, the common mode magnetic core and the differential mode magnetic core share the winding, to integrate the common mode inductor and the differential mode inductor into one component. This helps save space and reduce costs, and can further reduce a copper loss. Therefore, impact of the copper loss on efficiency of an inverter system is reduced, and efficiency of the integrated inductor is effectively improved. When the integrated inductor is assembled to a circuit board, because the common mode magnetic core and the differential mode magnetic core are stacked, an occupied area of the integrated inductor on the circuit board can be saved, and power density is improved.

In an implementation of this aspect, the third magnetic core and the second magnetic core enclose at least two mounting holes, and each winding correspondingly passes through one of the mounting holes. In this solution, the third magnetic core and the second magnetic core may enclose the at least two mounting holes, so that the differential mode magnetic core having such a structure is reliable and features good mass production. This helps to stack the differential mode magnetic core and the common mode magnetic core.

In an implementation of the aspect, the third magnetic core includes at least two magnetic columns and an upper magnetic core. The at least two magnetic columns are located between the upper magnetic core and the second magnetic core. The upper magnetic core, the at least two magnetic columns, and the second magnetic core enclose at least two mounting holes. In this solution, the magnetic column may be directly connected to the upper magnetic core or an air gap is formed. Alternatively, the magnetic column is directly connected to the second magnetic core or an air gap is formed. The winding is located between the upper magnetic core and the second magnetic core, and adjacent windings are spaced by one magnetic column. In this solution, a part of the second magnetic core, any two adjacent magnetic columns, and a part of the upper magnetic core enclose one mounting hole, and form a differential mode magnetic circuit. The differential mode magnetic core having such a structure is simple and reliable, and has features mass production. This helps to stack the differential mode magnetic core and the common mode magnetic core.

In an implementation of the aspect, the third magnetic core includes at least two magnetic columns. An end of each magnetic column is close to the second magnetic core, and ends of the at least two magnetic columns away from the second magnetic core are converged. The at least two magnetic columns and the second magnetic core enclose at least two mounting holes. In this solution, convergence may mean that ends, away from the second magnetic core, of the magnetic column are connected to form the air gap, or may mean that the ends, away from the second magnetic core, of the magnetic columns are close to each other to form the air gap. In this solution, the part of the second magnetic core and the any two adjacent magnetic columns enclose one mounting hole, and form a differential mode magnetic circuit. The differential mode magnetic circuit provided in this solution has a simple structure, which helps miniaturize a size of the integrated inductor.

In an implementation of the aspect, the common mode magnetic core has a first through hole. and the second magnetic core is located on a side of the common mode magnetic core in an axial direction of the first through hole. The second magnetic core has a second through hole, and the second through hole is communicated with the first through hole. Each mounting hole is communicated with the second through hole. Each winding correspondingly passes through one of the mounting holes, the second through hole, and the first through hole. In this solution, the common mode magnetic core and the second magnetic core each may be in an annular shape. In this solution, a specific stacked structure of the common mode magnetic core and the differential mode magnetic core is limited. The stacked structure is simple and reliable, and features good mass production. This helps miniaturize the size of the integrated inductor.

In an implementation of the aspect, a projection of the second magnetic core in the axial direction falls within a range of the common mode magnetic core. In this solution, a projection of the second magnetic core in a stacking direction is located within a contour and a boundary of the common mode magnetic core. This saves a projection area of the integrated inductor in the stacking direction, and saves a board area.

In an implementation of **the** aspect, a projection of the third magnetic core in the axial direction falls within a circumcircle of projections of the at least two windings in the axial direction. In this solution, projections of all windings in the axial direction may be located in a same circle, and a projection of each winding in the axial direction is connected to the circle. The circle may be referred to as a circumcircle. In this solution, the circumcircle determines a maximum outline dimension of the integrated inductor, so that the projection of the third magnetic core in the axial direction does not exceed the circumcircle. This saves the projection area of the integrated inductor in the axial direction, and saves the board area.

In an implementation **of the** aspect, the third magnetic core may have a rotationally symmetric structure. In this solution, the third magnetic core is limited to the rotationally symmetric structure, so that internal components of the third magnetic core can be uniformly distributed, and the structure is more appropriate, to facilitate cooperation with the winding. Therefore, a layout of the integrated inductor is compact, occupied mounting space is reduced, and working performance of the differential mode magnetic circuit is ensured.

In an implementation of the aspect, the integrated inductor includes a non-magnetic plate disposed between the common mode magnetic core and the second magnetic core, and the non-magnetic plate forms a first air gap. Alternatively, the integrated inductor includes a plurality of non-magnetic pillars disposed between the common mode magnetic core and the second magnetic core, and the plurality of non-magnetic pillars form a first air gap. Alternatively, an insulation layer is covered on a surface of the common mode magnetic core and/or a surface of the second magnetic core, and the insulation layer forms a first air gap. In this solution, magnetic circuits of the common mode magnetic core and the differential mode magnetic core are spaced by the first air gap between the common mode magnetic core and the differential mode magnetic core, so that the common mode magnetic circuit and the differential mode magnetic circuit are independent of each other and do not affect each other. This improves an overall anti-saturation capability of the integrated inductor.

In an implementation of **the** aspect, the first air gap is greater than or equal to 0.5 mm. When the first air gap is within the value range, a layout of the integrated inductor is compact, occupied mounting space is reduced, and the overall anti-saturation capability of the integrated inductor is optimized.

In an implementation of the aspect, a second air gap is formed between the second magnetic core and the third magnetic core. In this solution, both the second magnetic core and the third magnetic core are a part of the differential mode magnetic core, and the second air gap is formed between the second magnetic core and the third magnetic core, that is, there is an air gap inside the differential mode magnetic core. The second air gap can improve magnetic energy of the differential mode magnetic core.

In an implementation of the aspect, a third air gap is formed between each magnetic column and the upper magnetic core. In this solution, both the magnetic column and the upper magnetic core are a part of the differential mode magnetic core, and the third air gap is formed between the magnetic column and the upper magnetic core, that is, there is an air gap inside the differential mode magnetic core. The third air gap can improve the magnetic energy of the differential mode magnetic core.

The integrated inductor may be applied in a circuit board component. The circuit board component includes a circuit board and the integrated inductor. A winding of the integrated inductor is connected to the circuit board. In this solution, when the winding of the integrated inductor is mounted on the circuit board, board space in a first direction is small, so that mounting space is saved for other components on the circuit board, and a component layout of the circuit board is more appropriate.

### BRIEF DESCRIPTION OF DRAWINGS

FIG. 1 is a schematic diagram of a structure of a circuit framework of a conventional inverter;
FIG. 2 is a schematic diagram of a structure of a circuit framework of an inverter according to an embodiment of this application;
FIG. 3 is a schematic diagram of an assembly structure of an inverter according to an embodiment of this application;
FIG. 4 is a schematic diagram of an assembly structure of an integrated inductor according to an embodiment of this application;
FIG. 5 is a schematic diagram of a disassembly structure of an integrated inductor according to an embodiment of this application;
FIG. 6 is a schematic diagram of a top view structure of an integrated inductor according to an embodiment of this application;
FIG. 7 is a schematic diagram of a structure of a differential mode magnetic core of an integrated inductor according to an embodiment of this application;
FIG. 8 is a schematic diagram of a structure of a third magnetic core of an integrated inductor according to an embodiment of this application;
FIG. 9 is a schematic diagram of a structure of a winding of an integrated inductor according to an embodiment of this application; and
FIG. 10 is a schematic diagram of a structure of a circuit board according to an embodiment of this application.

### DESCRIPTION OF EMBODIMENTS

The following are explanations of some terms.

Parallel: Parallel defined in embodiments of this application is not limited to absolute parallel. The definition of the parallel may be understood as basic parallel, allowing for non-absolute parallel affected by factors such as an assembly tolerance, a design tolerance, and a structural flatness.

Vertical: Vertical defined in embodiments of this application is not limited to an absolute vertical intersection (an included angle is 90 degrees) relationship, allowing for a non-absolute vertical intersection relationship affected by factors such as an assembly tolerance, a design tolerance, and a structural flatness. An error within a small angle range is allowed. For example, a relationship within an assembly error range of 80 degrees to 100 degrees may be understood as a vertical relationship.

The terms "first" and "second" are used for descriptive purposes only, and cannot be understood as indicating or implying relative importance or implicitly indicating a quantity of indicated technical features. Therefore, features defined with "first" and "second" may explicitly or implicitly include one or more of the features.

The following describes solutions of this application based on embodiments.

An inverter is widely used in a power supply or power control scenario such as photovoltaic power generation or a frequency converter. When differential mode interference and common mode interference in the scenario have adverse impact on a circuit system, a filter circuit is usually used to filter the interference. A common mode signal is a signal with an equal amplitude and a same phase. A differential mode signal is a signal with an equal amplitude and an opposite phase. In a closed circuit, a common mode interference signal has an equal amplitude and a same direction on two conducting wires, which is essentially interference produced by a voltage difference between two wires and a ground cable in the closed circuit. A differential mode interference signal has an equal amplitude and an opposite phase between two conducting wires, which is essentially interference produced between the two wires.

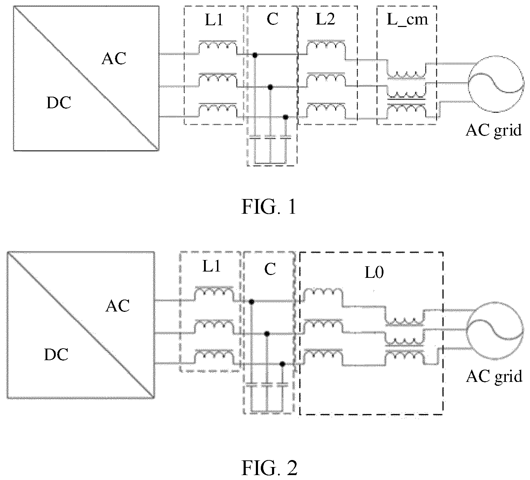

FIG. 1 is a schematic diagram of a structure of a circuit framework of a conventional inverter. As shown in FIG. 1, the inverter may include a direct current-alternating current (DC-AC) conversion circuit and a filter circuit. The filter circuit is connected to an alternating current side of the direct current-alternating current conversion circuit, and the direct current-alternating current (DC-AC) conversion circuit is connected to an alternating current grid (AC GRID) through the filter circuit. For example, the filter circuit may include an inductor L1, a filter capacitor C, a differential mode inductor L2, and a common mode inductor L_cm. For example, the inductor L1 and the filter capacitor C may filter a square wave output by the DC-AC conversion circuit into a sine wave. The differential mode inductor L2 may be configured to filter and suppress differential mode resonance, and the common mode inductor L_cm may be configured to suppress common mode interference.

In the foregoing solution, the common mode inductor L_cm and the differential mode inductor L2 in the inverter are independent of each other, and are separately mounted as two independent inductor elements. The solution has the following defects: When two inductors are mounted on a circuit board, a board area occupied by the two inductors is large, power density of the circuit board is small, and separate manufacturing costs of the two inductors are high.

In view of this, as shown in FIG. 2, the solution in this embodiment of this application provides an inverter. Consistent with the foregoing conventional solution, the inverter includes **a** direct current-alternating current conversion circuit and a filter circuit. The filter circuit is connected to an alternating current side of the direct current-alternating current conversion circuit, and the direct current-alternating current conversion circuit may be connected to a grid through the filter circuit. For example, the filter circuit may include an inductor L1 and a filter capacitor C. Different from the foregoing conventional solution, the filter circuit in this embodiment of this application includes an integrated inductor L0. The integrated inductor L0 integrates a common mode inductor and a differential mode inductor into a component, and the common mode inductor and the differential mode inductor are stacked in sequence. In this way, a volume and occupied board area can be reduced, costs can be reduced, and power density can be further improved. The following describes in detail.

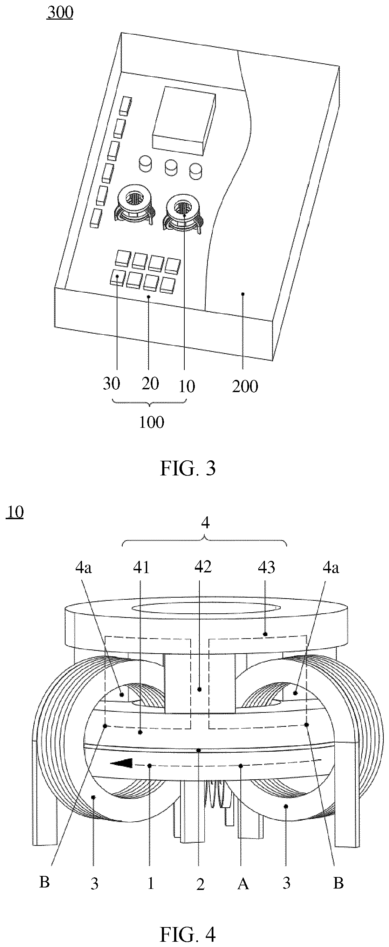

As shown in FIG. 3, an embodiment of this application provides an inverter 300. The inverter 300 may include a circuit board component 100 and a housing 200. The housing 200 surrounds an outer side of the circuit board component 100, to accommodate and protect the circuit board component 100. The circuit board component 100 may include electronic components such as an integrated inductor 10, a circuit board 20, and a control chip 30. Both the integrated inductor 10 and the control chip 30 may be disposed on the circuit board 20, and positions of the integrated inductor 10 and the control chip 30 on the circuit board 20 may be determined as required. This is not limited in this embodiment of this application.

As shown in FIG. 4, FIG. 5, and FIG. 6, the integrated inductor 10 may include a first magnetic core 1, an air gap plate 2, a differential mode magnetic core 4, and windings 3.

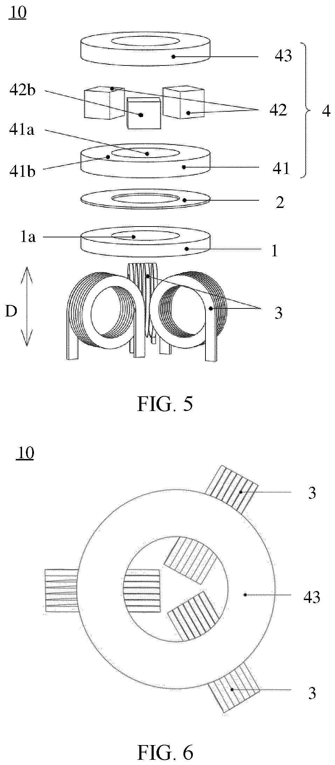

As shown in FIG. 4 and FIG. 5, the first magnetic core 1 may have an annular structure. The first magnetic core 1 has a first through hole 1a, and the first through hole 1a passes through the first magnetic core 1 in an axial direction of the first magnetic core 1. An axial direction of the first through hole 1a is a first direction. Refer to FIG. 5. An extension direction of an arrow D is the first direction. In this embodiment of this application, the first magnetic core 1 has an annular structure. In another embodiment, the first magnetic core 1 is not limited to the annular structure, and may alternatively be another polygonal ring structure. In this implementation of this application, the first magnetic core 1 may be made of magnetic materials such as a ferrite and an amorphous strip.

As shown in FIG. 4 and FIG. 5, the air gap plate 2 has an annular plate structure with a through hole. An air gap plate 2 is located on a side of the first magnetic core 1 in the first direction. The air gap plate 2 is attached to the first magnetic core 1, and the first through hole 1a is connected to the through hole of the air gap plate 2. The air gap plate 2 may be made of non-magnetic plates such as an epoxy plate and a polyvinyl chloride (PVC) plate.

The following describes a structure of the differential mode magnetic core 4 and a position relationship among the differential mode magnetic core 4, the first magnetic core 1, and the air gap plate 2.

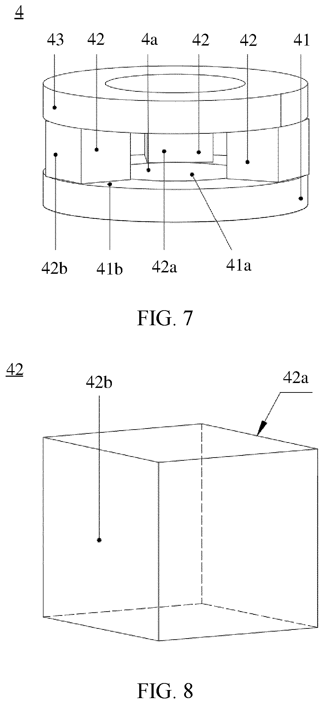

As shown in FIG. 5 and FIG. 7, the differential mode magnetic core 4 may include a second magnetic core 41 and a third magnetic core.

As shown in FIG. 5 and FIG. 7, the second magnetic core 41 may have an annular structure. The second magnetic core 41 has a second through hole 41a, and the second through hole 41a passes through the second magnetic core 41 in an axial direction of the second magnetic core 41. A side surface of the second magnetic core 41 is a first surface 41b of the second magnetic core 41. The second magnetic core may be made of magnetic materials such as a silicon steel magnetic material and an amorphous strip. In this embodiment of this application, the second magnetic core 41 has an annular structure. In another embodiment, the second magnetic core 41 is not limited to the annular structure, and may alternatively be another polygonal ring structure.

As shown in FIG. 4 and FIG. 5, the second magnetic core 41 is located, in the first direction, on a side that is of the air gap plate 2 and that is away from the first magnetic core 1, so that the air gap plate 2 is located between the first magnetic core 1 and the second magnetic core 41, the first surface 41b of the second magnetic core 41 is away from the air gap plate 2, and the first direction is approximately vertical to the first surface 41b.

In the first direction, a spacing between the first magnetic core 1 and the second magnetic core 41 is a first air gap. In this embodiment of this application, the first air gap may be formed by an air gap plate 2 between the second magnetic core 41 and the first magnetic core 1.

In another implementation, an insulation layer (for example, the insulation layer may be a housing that wraps an outer surface of the second magnetic core 41 and/or an outer surface first magnetic core 1) may be disposed on a surface of the second magnetic core 41 and/or a surface of the first magnetic core 1, to form the first air gap.

Alternatively, the first air gap may be formed by forming a gap between the first magnetic core 1 and the second magnetic core 41 (there is air in the gap). A plurality of support columns with low magnetic permeability may be disposed in the gap, to support the first magnetic core 1 and the second magnetic core 41.

Alternatively, the first air gap may be formed by filling another material with low magnetic permeability between the first magnetic core 1 and the second magnetic core 41. The material with low magnetic permeability is filled in the gap between the first magnetic core 1 and the second magnetic core 41.

In this implementation of this application, a size of a circumcircle of the second magnetic core 41 may be basically the same as a size of a circumcircle of the first magnetic core 1. In another implementation, a shape and a size of the second magnetic core 41 may be designed as required, provided that a projection of the second magnetic core in the first direction falls within a projection of the first magnetic core 1.

The third magnetic core may have a rotationally symmetric structure, and a center of the rotationally symmetric structure may be the axial direction of the second magnetic core 41. A projection of the third magnetic core in the first direction falls within a circumcircle of projections of the windings 3 in the first direction, for example, falls within the first surface 41b. The third magnetic core and the second magnetic core 41 enclose at least two mounting holes. Enclosing the mounting holes may mean that the second magnetic core 41 is directly connected to the third magnetic core to form the mounting hole, or may mean that there is a small gap between the second magnetic core 41 and the third magnetic core, which may still be considered as enclosing the mounting hole in a macro sense. An axial direction of each mounting hole intersects with the first direction. For example, the axial direction of the mounting hole is vertical to the first direction.

In an implementation, the third magnetic core may include a magnetic column 42 and an upper magnetic core 43.

As shown in FIG. 5 and FIG. 8, the magnetic column 42 may have a column structure. The magnetic column 42 has a second surface 42a and a third surface 42b that are opposite to each other. The second surface 42a and/or the third surface 42b may be a plane or a curved surface. The magnetic column 42 may be made of magnetic materials such as a silicon steel magnetic material and an amorphous strip. There may be a plurality of magnetic columns 42. In this implementation of this application, there may be three magnetic columns 42, configured to generate a three-phase differential mode inductor. In another implementation, a quantity of magnetic columns 42 may be designed as required.

As shown in FIG. 4, FIG. 5, and FIG. 8, the three magnetic columns 42 are located, in the first direction, on a side of the second magnetic core 41 having the first surface 41b, and the three magnetic columns 42 are uniformly distributed at intervals around the second through hole 41a. Second surfaces 42a of the magnetic columns 42 face an inner side of the second magnetic core 41, and third surfaces 42b of the magnetic column 42 face the outer surface of the second magnetic core 41. At least a part of projections of the magnetic columns 42 in the first direction falls within the first surface 41b. For example, the projections of the magnetic columns 42 in the first direction may completely fall within the first surface 41b. When the second surface 42a and the third surface 42b are planes, both the second surface 42a and the third surface 42b are vertical to the first surface 41b. When the second surface 42a and the third surface 42b are cambered surfaces, buses of the second surface 42a and the third surface 42b each are approximately vertical to the first surface 41b, and the buses of the second surface 42a and the third surface 42b may be a moving line for forming any one of the second surface 42a and the third surface 42b. A second air gap may be formed between each magnetic column 42 and the second magnetic core 41, and a value range of the second air gap may be 0.1 mm to 1 mm. For example, the second air gap may be formed by using an air gap plate or glue. The differential mode magnetic core 4 and the integrated inductor 10 have corresponding magnetic performance by disposing the second air gap. In another embodiment, there may be no second air gap.

As shown in FIG. 4, FIG. 5, and FIG. 6, the upper magnetic core 43 may have an annular structure. The upper magnetic core 43 may be made of magnetic materials such as a silicon steel magnetic material, an amorphous strip, and a powdered iron core magnetic material. The upper magnetic core 43 is located on a side that is of the magnetic column 42 and that is away from the second magnetic core 41, and the upper magnetic core 43 is approximately parallel to the second magnetic core 41. A third air gap is formed between the upper magnetic core 43 and each magnetic column 42, and a value range of the third air gap may be 0.1 mm to 1 mm. For example, the third air gap may be formed by using an air gap plate or glue. The differential mode magnetic core 4 and the integrated inductor 10 have better magnetic performance by disposing the third air gap. In another embodiment, there may be no third air gap.

As shown in FIG. 4, a projection of the upper magnetic core 43 in the first direction falls within a circumcircle of projections of three windings 3 in the first direction (the following continues to describe assembly and cooperation of the three windings 3 with the first magnetic core 1, the second magnetic core 41, and the magnetic column 42).

In this embodiment of this application, the upper magnetic core 43 may have an annular structure whose shape and size are approximately the same as those of the second magnetic core 41. Different from the foregoing embodiment, in another embodiment, the upper magnetic core is not limited to the annular structure, and may alternatively have another closed structure (including but not limited to a closed square annular structure). Alternatively, the upper magnetic core may include a plurality of sub magnetic cores that are distributed at intervals, and each sub magnetic core corresponds to two magnetic columns.

As shown in FIG. 4, the first magnetic core 1, the second magnetic core 41, the magnetic column 42, and the upper magnetic core 43 are stacked in sequence in the first direction. The first magnetic core 1 may be a common mode magnetic core, and the second magnetic core 41, the three magnetic columns 42, and the upper magnetic core 43 jointly form the differential mode magnetic core 4. In the differential mode magnetic core 4, as shown in FIG. 7, a part of the second magnetic core 41, any two adjacent magnetic columns 42, and a part of the upper magnetic core 43 enclose a mounting hole 4a. An axial direction of the mounting hole 4a intersects with the first direction. For example, the axial direction of the mounting hole 4a is vertical to the first direction. In this embodiment of this application, because there are three magnetic columns 42, three mounting holes 4a are formed.

In another implementation, the third magnetic core may include a magnetic column. A shape and a material of the magnetic column may be approximately the same as those of the magnetic column 42 in the foregoing implementation, and there may be a plurality of magnetic columns. The plurality of magnetic columns are all located, in the first direction, on a side that is of the second magnetic core 41 and that is away from the first magnetic core 1, and are uniformly distributed around the second through hole 41a. An end of each magnetic column is close to the second magnetic core, and the ends of the plurality of magnetic columns are converged (convergence may mean that ends of the plurality of magnetic columns are connected to each other to form a specific air gap, or may mean that ends of the plurality of magnetic columns are close to each other to form a specific air gap). The second air gap is formed between each magnetic column and the second magnetic core. The value range and a forming manner of the second air gap may be approximately the same as those of the second air gap in the foregoing implementation. Details are not described herein again. In this implementation, the first magnetic core 1, the second magnetic core 41, and the plurality of magnetic columns are stacked in sequence in the first direction. The first magnetic core 1 may be a common mode magnetic core, and the second magnetic core 41 and the plurality of magnetic columns jointly form a differential mode magnetic core. In the differential mode magnetic core, a part of the second magnetic core 41 and any two adjacent magnetic columns enclose a mounting hole. An axial direction of the mounting hole intersects with the first direction. For example, the axial direction of the mounting hole may be vertical to the first direction.

The foregoing mainly describes a position relationship among the common mode magnetic core, the differential mode magnetic core 4, and the air gap plate 2 in the integrated inductor 10. The following describes a structure of the winding 3, and assembly and cooperation of the winding 3 with the differential mode magnetic core 4 and the first magnetic core 1.

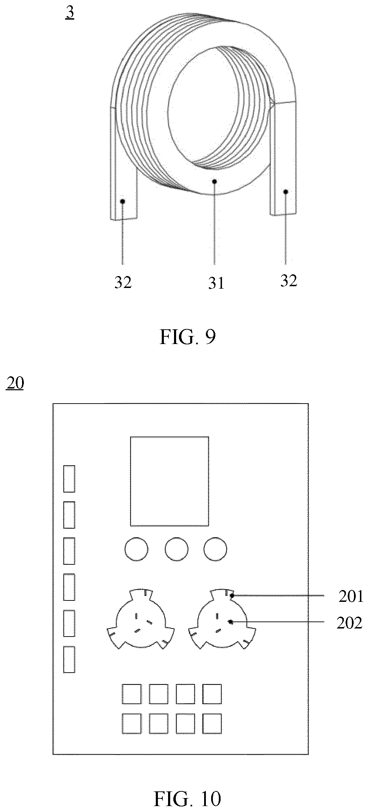

In this embodiment of this application, the winding 3 is formed by enclosing a line of which an outer surface is covered with an insulation layer. The winding 3 may be, for example, an enameled wire or a film-clad wire. As shown in FIG. 9, the winding 3 includes a coil body 31 and a wiring pin 32 that are connected to each other. The coil body 31 has a through hole enclosed by a coil. In an implementation, there may be two wiring pins 32 that are respectively located on two sides of the coil body 31 and are approximately tangent to the coil body 31. In other implementations, the wiring pins 32 may be located on a same side of the coil body 31. If distribution manners of the wiring pins 32 on the coil body 31 are different, mounting areas of the integrated inductor 10 on the circuit board 20 are different. Therefore, positions of the wiring pins 32 may be designed as required. A quantity of windings 3 corresponds to the quantity of magnetic columns 42. There are at least two windings 3, for example, there may be three windings 3. A quantity of turns of a coil of each winding 3 is the same, and a winding direction of each winding 3 is the same.

As shown in FIG. 4, FIG. 5, and FIG. 9, the coil body 31 of each winding 3 passes through the first through hole 1a, the through hole of the air gap plate 2, the second through hole 41a, and the mounting hole 4a, so that each winding 3 is wound around the first magnetic core 1, the air gap plate 2, and the differential mode magnetic core. A through hole of each coil body 31 accommodates a part of the first magnetic core 1, a part of the air gap plate 2, and the part of the second magnetic core 41. The wiring pin 32 of the winding 3 is located, in the first direction, on a side that is of the first magnetic core 1 and that is away from the second magnetic core 41. As shown in FIG. 4, the three windings 3 may be uniformly distributed on the first magnetic core 1, a gap is formed between adjacent windings, and a spacing is formed between every two windings 3.

As shown in FIG. 4, because the first magnetic core 1 is a closed annular magnetic core, the first magnetic core 1 forms a closed common mode magnetic circuit A (FIG. 2 only shows a part of the common mode magnetic circuit A, and does not show a complete common mode magnetic circuit A), and the first magnetic core 1 and each winding 3 form a common mode inductor. The common mode inductor is configured to suppress common mode interference. As an example rather than a limitation, common mode inductance formed between the winding 3 and the first magnetic core 1 may be adjusted by adjusting the quantity of turns of any winding 3 or by adjusting an area of a cross section of the first magnetic core 1.

As shown in FIG. 4, the differential mode magnetic core 4 forms three differential mode magnetic circuits B in total (FIG. 4 shows only two differential mode magnetic circuits B, but does not shows all differential mode magnetic circuits B). The part of the second magnetic core 41, the any two adjacent magnetic columns 42, and the part of the upper magnetic core 43 form one differential mode magnetic circuit B. Each magnetic column 42 is used as a common magnetic core of two adjacent differential mode magnetic circuits B. The differential mode magnetic core 4 and the winding 3 wound on the differential mode magnetic core 4 form a differential mode inductor, to suppress a differential mode current. The magnetic column 42 is used as the common magnetic core, so that a volume of the differential mode magnetic core 4 can be reduced. This solution facilitates assembly, has higher flexibility in an assembly process, and improves assembly efficiency.

The first air gap between the differential mode magnetic core 4 and the first magnetic core 1 can isolate the differential mode magnetic core 4 and the first magnetic core 1, so that the differential mode magnetic circuit B and the common mode magnetic circuit A are independent of each other and do not interfere with each other.

In this embodiment, the second air gap and the third air gap inside the differential mode magnetic core 4 can improve stability of a magnetic field of the integrated inductor 10, so that the integrated inductor 10 has better magnetic performance. In other embodiments, the second air gap and/or the third air gap may not be disposed.

In the foregoing implementation, the first magnetic core 1 and the second magnetic core 41 each have a closed annular structure, which is only an example. Actually, structures of magnetic cores of the first magnetic core 1 and the second magnetic core 41 may be set in any shape as required, and are not limited to the closed annular structure.

In the foregoing implementation, there are three windings 3 and three magnetic columns 42, which are used to form a three-phase integrated inductor. In other implementations, four windings 3 and four magnetic columns 42 may form a three-phase four-wire integrated inductor. Alternatively, two windings 3 and two magnetic columns 42 may form a two-phase integrated inductor, and the two-phase integrated inductor may be, for example, used as a single-phase energy storage inverter.

With reference to FIG. 3 and FIG. 10, an inductor mounting area 201 is disposed on the circuit board 20, and a pad 202 is disposed in the inductor mounting area 201. The inductor mounting area 201 is configured to position and mount the integrated inductor 10. A contour of the inductor mounting area 201 is basically the same as a projection of an outer contour of the integrated inductor 10 in the first direction. Therefore, an area of the inductor mounting area 201 is board space of the integrated inductor 10 on the circuit board 20. The pad 202 corresponds to the wiring pin 32 of the winding 3, so that the wiring pin 32 is welded on the pad 202. A position of the pad 202 in the inductor mounting area 201 depends on a position of the wiring pins 32. The position of the pad 202 may be designed as required, and this is not limited herein.

A conventional common mode inductor and a conventional differential mode inductor are usually used as two components, and are separately manufactured and mounted. Therefore, a board area on the circuit board is large and power density is small.

However, in this embodiment of this application, the integrated inductor 10 integrates differential mode inductor and the common mode inductor are integrated, so that a volume of the integrated inductor 10 is greatly reduced, the board area on the circuit board 20 is reduced, the power density is improved, and costs are reduced. In addition, the differential mode magnetic core 4 and the first magnetic core 1 share the three-phase winding 3. On the premise of ensuring that the differential mode current and the common mode current are suppressed, usage of the winding 3 can be reduced, and a copper loss can be effectively reduced, so that impact of the copper loss on efficiency of an inverter system is reduced, and efficiency of the integrated inductor 10 is effectively improved. In addition, in this embodiment of this application, a first air gap is formed between the differential mode magnetic core 4 and the first magnetic core 1, so that the differential mode magnetic circuit B and the common mode magnetic circuit A are independent of each other, to prevent coupling. In a case of a large current, a magnetic flux of the differential mode magnetic core 4 does not occupy a magnetic flux of the first magnetic core, to oversaturate the differential mode magnetic core 4. Therefore, the integrated inductor 10 provided in this embodiment of this application can withstand a larger current, and has an excellent anti-magnetic saturation capability.

In addition, in this embodiment of this application, the integrated inductor 10 is disposed in a stacking manner, projections of magnetic cores of the differential mode magnetic core 4 in the first direction have a large overlapping area with projections of the first magnetic core 1 in the first direction, and the magnetic column 42 of the differential mode magnetic core 4 is a common magnetic core shared by adjacent differential mode magnetic circuits. These designs can reduce a board area occupied by the magnetic column 42 in the first direction. Therefore, when the integrated inductor 10 is mounted on the circuit board 20, the area of the inductor mounting area 201 can be greatly reduced, mounting space can be reserved for other components on the circuit board 20, and a volume of the circuit board component 100 can also be reduced.

The foregoing descriptions are only specific implementations of this application. Any variation or replacement readily figured out by a person skilled in the art within the technical scope disclosed in this application shall fall within the protection scope of the claims. Therefore, the protection scope of this application shall be subject to the protection scope of the claims.

## Claims

1. An integrated inductor (L₀) comprising a common mode magnetic core (1), a differential mode magnetic core (4), and at least two windings (3); the differential mode magnetic core (4) comprises a second magnetic core (41) and a third magnetic core (42, 43), wherein
; the common mode magnetic core (1), the second magnetic core (41), and the third magnetic core are stacked in sequence in a first direction; each winding (3) is located between the third magnetic core and the second magnetic core (41), and is wound on the common mode magnetic core (1) and the second magnetic core (41); and the at least two windings (3) are spaced by the third magnetic core;
wherein the third magnetic core and the second magnetic core (41) enclose at least two mounting holes (4a) and each winding (3) correspondingly passes through one of the mounting holes; wherein an axial direction of the at least two mounting holes intersect with the first direction;
wherein the common mode magnetic core (1) has a first through hole (1a); the second magnetic core (41) is located on a side of the common mode magnetic core (1) in an axial direction of the first through hole (1a) corresponding to the first direction, wherein the second magnetic core (41) has a second through hole (41a), and the second through hole (41a) is communicated with the first through hole (1a); each mounting hole is communicated with the second through hole (41a); and each winding (3) correspondingly passes through one of the mounting holes, the second through hole (41a), and the first through hole (1a).

2. The integrated inductor according to claim 1, wherein
the third magnetic core comprises at least two magnetic columns and an upper magnetic core (43), the at least two magnetic columns are located between the upper magnetic core (43) and the second magnetic core (41), and the upper magnetic core (43), the at least two magnetic columns, and the second magnetic core (41) enclose the at least two mounting holes.

3. The integrated inductor according to claim 1, wherein
the third magnetic core comprises at least two magnetic columns, an end of each magnetic column is close to the second magnetic core (41), ends, of the at least two magnetic columns, away from the second magnetic core (41) are converged, and the at least two magnetic columns and the second magnetic core (41) enclose the at least two mounting holes.

4. The integrated inductor according to claim 3, wherein
a projection of the second magnetic core (41) in the axial direction falls within a range of the common mode magnetic core (1).

5. The integrated inductor according to claim 1, wherein
a projection of the third magnetic core in the axial direction falls within a circumcircle of projections of the at least two windings (3) in the axial direction.

6. The integrated inductor according to any one of claims 1 to 5, wherein
the integrated inductor comprises a non-magnetic plate disposed between the common mode magnetic core (1) and the second magnetic core (41), and the non-magnetic plate forms a first air gap; or
the integrated inductor comprises a plurality of non-magnetic pillars disposed between the common mode magnetic core (1) and the second magnetic core (41), and the plurality of non-magnetic pillars form a first air gap; or
an insulation layer is covered on a surface of the common mode magnetic core (1) and/or a surface of the second magnetic core (41), and the insulation layer forms a first air gap.

7. The integrated inductor according to claim 6, wherein
the first air gap is greater than or equal to 0.5 mm.

8. An inverter, comprising: a direct current-alternating current conversion circuit and a filter circuit,
wherein the filter circuit is connected to an alternating current side of the direct current-alternating current conversion circuit, **characterized in that** the filter circuit comprises an integrated inductor (L₀) according to claims 1 - 7.

## Patentansprüche

1. Integrierte Induktivität (L₀), umfassend
einen Gleichtakt-Magnetkern (1), einen Gegentakt-Magnetkern (4) und mindestens zwei Wicklungen (3); wobei der Gegentakt-Magnetkern (4) einen zweiten Magnetkern (41) und einen dritten Magnetkern (42, 43) umfasst, wobei der Gleichtakt-Magnetkern (1), der zweite Magnetkern (41) und der dritte Magnetkern nacheinander in einer ersten Richtung gestapelt sind; sich jede Wicklung (3) zwischen dem dritten Magnetkern und dem zweiten Magnetkern (41) befindet und auf den Gleichtakt-Magnetkern (1) und den zweiten Magnetkern (41) gewickelt ist; und die mindestens zwei Wicklungen (3) durch den dritten Magnetkern beabstandet sind;
wobei der dritte Magnetkern und der zweite Magnetkern (41) mindestens zwei Montagelöcher (4a) umschließen und jede Wicklung (3) entsprechend durch eines der Montagelöcher verläuft; wobei eine axiale Richtung der mindestens zwei Montagelöcher die erste Richtung schneidet;
wobei der Gleichtakt-Magnetkern (1) ein erstes Durchgangsloch (1a) aufweist; sich der zweite Magnetkern (41) auf einer Seite des Gleichtakt-Magnetkerns (1) in einer axialen Richtung des ersten Durchgangslochs (1a) befindet, die der ersten Richtung entspricht, wobei der zweite Magnetkern (41) ein zweites Durchgangsloch (41a) aufweist und das zweite Durchgangsloch (41a) mit dem ersten Durchgangsloch (1a) in Verbindung steht; jedes Montageloch mit dem zweiten Durchgangsloch (41a) in Verbindung steht; und jede Wicklung (3) entsprechend durch eines der Montagelöcher, das zweite Durchgangsloch (41a) und das erste Durchgangsloch (1a) verläuft.

2. Integrierte Induktivität nach Anspruch 1, wobei der dritte Magnetkern mindestens zwei Magnetstäbe und einen oberen Magnetkern (43) umfasst, sich die mindestens zwei Magnetstäbe zwischen dem oberen Magnetkern (43) und dem zweiten Magnetkern (41) befinden und der obere Magnetkern (43), die mindestens zwei Magnetstäbe und der zweite Magnetkern (41) die mindestens zwei Montagelöcher umschließen.

3. Integrierte Induktivität nach Anspruch 1, wobei der dritte Magnetkern mindestens zwei Magnetstäbe umfasst, sich ein Ende jedes Magnetstabs nahe dem zweiten Magnetkern (41) befindet, sich Enden der mindestens zwei Magnetstäbe von dem zweiten Magnetkern (41) entfernt annähern und die mindestens zwei Magnetstäbe und der zweite Magnetkern (41) die mindestens zwei Montagelöcher umschließen.

4. Integrierte Induktivität nach Anspruch 3, wobei eine Projektion des zweiten Magnetkerns (41) in axialer Richtung in einem Bereich des Gleichtakt-Magnetkerns (1) liegt.

5. Integrierte Induktivität nach Anspruch 1, wobei eine Projektion des dritten Magnetkerns in axialer Richtung innerhalb eines Umkreises von Projektionen der mindestens zwei Wicklungen (3) in axialer Richtung liegt.

6. Integrierte Induktivität nach einem der Ansprüche 1 bis 5, wobei
die integrierte Induktivität eine nichtmagnetische Platte umfasst, die zwischen dem Gleichtakt-Magnetkern (1) und dem zweiten Magnetkern (41) angeordnet ist, und die nichtmagnetische Platte einen ersten Luftspalt bildet; oder
die integrierte Induktivität eine Vielzahl von nichtmagnetischen Säulen umfasst, die zwischen dem Gleichtakt-Magnetkern (1) und dem zweiten Magnetkern (41) angeordnet ist, und die Vielzahl von nichtmagnetischen Säulen einen ersten Luftspalt bildet; oder
eine Isolierschicht auf einer Oberfläche des Gleichtakt-Magnetkerns (1) und/oder einer Oberfläche des zweiten Magnetkerns (41) aufgebracht ist und die Isolierschicht einen ersten Luftspalt bildet.

7. Integrierte Induktivität nach Anspruch 6, wobei der erste Luftspalt größer oder gleich 0,5 mm ist.

8. Wechselrichter, umfassend: eine Gleichstrom-Wechselstrom-Umwandlungsschaltung und eine Filterschaltung, wobei die Filterschaltung mit einer Wechselstromseite der Gleichstrom-Wechselstrom-Umwandlungsschaltung verbunden ist, **dadurch gekennzeichnet, dass** die Filterschaltung eine integrierte Induktivität (L₀) nach Anspruch 1-7 umfasst.

## Revendications

1. Inducteur intégré (L₀) comprenant
un noyau magnétique en mode commun (1), un noyau magnétique en mode différentiel (4) et au moins deux enroulements (3) ; le noyau magnétique en mode différentiel (4) comprend un deuxième noyau magnétique (41) et un troisième noyau magnétique (42, 43), dans lequel le noyau magnétique en mode commun (1), le deuxième noyau magnétique (41) et le troisième noyau magnétique sont empilés en séquence dans une première direction ; chaque enroulement (3) est situé entre le troisième noyau magnétique et le deuxième noyau magnétique (41), et est enroulé sur le noyau magnétique en mode commun (1) et le deuxième noyau magnétique (41) ; et les au moins deux enroulements (3) sont espacés par le troisième noyau magnétique ;
dans lequel le troisième noyau magnétique et le deuxième noyau magnétique (41) entourent au moins deux trous de montage (4a) et chaque enroulement (3) passe de manière correspondante à travers l'un des trous de montage ; dans lequel une direction axiale des au moins deux trous de montage croise la première direction ;
dans lequel le noyau magnétique de mode commun (1) a un premier trou traversant (1a) ; le deuxième noyau magnétique (41) est situé sur un côté du noyau magnétique de mode commun (1) dans une direction axiale du premier trou traversant (1a) correspondant à la première direction, dans lequel le deuxième noyau magnétique (41) a un second trou traversant (41a), et le second trou traversant (41a) est en communication avec le premier trou traversant (1a) ; chaque trou de montage est en communication avec le second trou traversant (41a) ; et chaque enroulement (3) passe de manière correspondante à travers l'un des trous de montage, le second trou traversant (41a) et le premier trou traversant (1a).

2. Inducteur intégré selon la revendication 1, dans lequel le troisième noyau magnétique comprend au moins deux colonnes magnétiques et un noyau magnétique supérieur (43), les au moins deux colonnes magnétiques sont situées entre le noyau magnétique supérieur (43) et le deuxième noyau magnétique (41), et le noyau magnétique supérieur (43), les au moins deux colonnes magnétiques et le deuxième noyau magnétique (41) entourent les au moins deux trous de montage.

3. Inducteur intégré selon la revendication 1, dans lequel le troisième noyau magnétique comprend au moins deux colonnes magnétiques, une extrémité de chaque colonne magnétique est proche du deuxième noyau magnétique (41), les extrémités des au moins deux colonnes magnétiques, éloignées du deuxième noyau magnétique (41) sont convergées, et les au moins deux colonnes magnétiques et le deuxième noyau magnétique (41) entourent les au moins deux trous de montage.

4. Inducteur intégré selon la revendication 3, dans lequel une projection du deuxième noyau magnétique (41) dans la direction axiale tombe dans une plage du noyau magnétique en mode commun (1).

5. Inducteur intégré selon la revendication 1, dans lequel une saillie du troisième noyau magnétique dans la direction axiale tombe dans un cercle circonscrit de saillies des au moins deux enroulements (3) dans la direction axiale.

6. Inducteur intégré selon l'une quelconque des revendications 1 à 5, dans lequel
l'inducteur intégré comprend une plaque non magnétique disposée entre le noyau magnétique en mode commun (1) et le deuxième noyau magnétique (41), et la plaque non magnétique forme un premier entrefer ; ou
l'inducteur intégré comprend une pluralité de piliers non magnétiques disposés entre le noyau magnétique en mode commun (1) et le deuxième noyau magnétique (41), et la pluralité de piliers non magnétiques forme un premier entrefer ; ou
une couche isolante est recouverte sur une surface du noyau magnétique en mode commun (1) et/ou une surface du deuxième noyau magnétique (41), et la couche isolante forme un premier entrefer.

7. Inducteur intégré selon la revendication 6, dans lequel le premier entrefer est supérieur ou égal à 0,5 mm.

8. Onduleur comprenant : un circuit de conversion de courant continu en courant alternatif et un circuit de filtrage, dans lequel le circuit de filtrage est connecté à un côté courant alternatif du circuit de conversion de courant continu en courant alternatif, **caractérisé en ce que** le circuit de filtrage comprend un inducteur intégré (L₀) selon les revendications 1 à 7.
